# EUROPEAN PATENT SPECIFICATION

(11) **EP 1 139 583 B1**
(45) Date of publication and mention of the grant of the patent: **02.08.2006**
(21) Application number: 01105196.8
(22) Date of filing: 03.03.2001
(51) Int. Cl.: H04B 7/185

(54) **Geo stationary communications system with minimal delay**
Geostationäres Kommunikationssystem mit mininimaler Verzögerung
Système de communication geostationnaire avec delai minimal

(30) Priority: 31.03.2000 US 539964
(43) Date of publication of application: 04.10.2001
(73) Proprietor: Hughes Electronics Corporation, El Segundo, California 90245-0956 (US)
(72) Inventor: Rosen, Harold, Santa Monica, California 90402 (US); Chang, Donald C.D., Thousand Oaks, California 91360 (US); Chang, Ming U., Rancho Palos Verdes, California 90275 (US); Wang, Weizheng, Rancho Palos Verdes, California 90275 (US); Novak, John I. III, West Hills, California 91307 (US); Lim, Wah L., Santa Ana, California 92705 (US)
(74) Representative: Steil, Christian

(56) References cited:
- WO-A-95/04407
- WO-A-97/07609
- WO-A-98/51568
- WO-A-99/23769

## Description

### 1. Field of the invention

The present invention relates to a communications system which comprises a plurality of communications platforms, each communications platform traveling on a path which is located in a stratosphere-based substantially geostationary location, each communications platform having a transponder being adapted for communicating directly with a user terminal, for receiving information from the user terminal and for transmitting information to the user terminal, and a gateway which is adapted for communicating with one of the communications platforms and for coupling the user terminal with a terrestrial-based network through the communications platform.

Such a communications system is known from WO 95/04407.

The present invention further relates to a corresponding communications signal as well as a method for communicating between a user terminal and a terrestrial-based network.

This invention relates in general to communications systems, and in particular to a geo-stationary communications system with minimal delay.

### 2. Description of Related Art.

Communications satellites have become commonplace for use in many types of communications services, e.g., data transfer, voice communications, television spot beam coverage, and other data transfer applications. As such, satellites transmit and receive large amounts of signals, used in either a "bent pipe" or "spot array" configuration to transmit signals to desired geographic locations on the Earth's surface.

Because of the increase in satellite usage, the available resources on a given satellite have been completely utilized without providing enough signal coverage to a desired geographic region. As such, users on the ground must either go without the satellite service, accept a reduced Quality of Service (QoS) for the satellite service, or timeshare the satellite service with other users, none of which are acceptable for users that require access to the satellite service at any given time. Further, the delay in sending signals to a geosynchronous satellite is approximately two seconds travel time, which increases the delays in a satellite-based communications system.

It can be seen, then, that there is a need in the art for a communications system that provides high-speed access to the Internet and other terrestrial networks. It can also be seen that there is a need in the art for high-speed access to such networks for a large number of users. It can also be seen that there is a need in the art for high-speed access to such networks with minimal delays in the system architecture.

WO 99/23769 discloses a wireless communication using an airborne switching node. A communication system includes an aircraft supporting an airborne switching node that provides communication services to a variety of ground-based devices located in the service region. The devices include subscriber devices, such as customer premises equipment and business premises equipment, as well as gateway devices.

The system for providing communication to a service region having a number of cells includes an aircraft flying above the service region. The airborne switching node coupled to the aircraft includes a phased array antenna that electronically directs a number of beams to the cells in the service region. The airborne switching node also includes a switch that couples data received from a first cell to the antenna for transmission to a second cell (or to a different subscriber in the same cell). A number of devices located in the cells of the service region communicate data with the airborne switching node.

Gateway devices operate to link the airborne switching node to the public switched telephone network (PSTN), internet service providers (ISPs), cable or video service providers, or other networks within or outside the service region of the ASN.

The aircraft maintains a station at an altitude of between 52,000 and 60,000 feet by flying in a circle with a diameter of approximately five to eight miles.

WO 98/51568 discloses an aerial communications network. A global communications network comprises a plurality of aerial platforms or vehicles deployed at an altitude in or near the stratosphere and permitted to drift in a controlled manner such that each platform adjusts its position relative to other aerial platforms. Each aerial platform has a propulsion system and control surfaces and preferably includes a lighter-than-air component to maintain lift in an economical manner. Each aerial platform also includes a payload, means for communicating with other aerial platforms and a control system including location-finding equipment and a processor adapted for directing the platform's propulsion system and control surfaces to effectuate changes in the aerial platform's position relative to other aerial platforms based on position information. The communications network provides a self-adjusting network for creating and maintaining a global communications link optionally capable of interoperating with one or more orbiting communications satellites or with ground, air or sea-based equipment.

To overcome the limitations in the prior art described above, and to overcome other limitations that will become apparent upon reading and understanding the present specification, the present invention discloses a method for communicating and a communications system apparatus. The apparatus comprises a communications platform and a gateway. The communications platform is located in a stratospheric location and communicates directly with a user terminal, receiving information from the user terminal and transmitting information to the user terminal. The gateway communicates with the communications platform and couples the user terminal with a terrestrial-based network through the communications platform.

The distance between two neighboring platforms is 8.6 times the radius of the traveling path.

The method comprises sending a first signal from the user terminal to a stratosphere-based communications platform, transmitting the first signal from the stratosphere-based communications platform to a gateway ground station, and transmitting the first signal from the gateway ground station to the terrestrial based network

The present invention provides a communications system that provides high-speed access to the Internet and other terrestrial networks. The present invention also provides high-speed access to such networks for a large number of users. The present invention also provides high-speed access to such networks with minimal delays in the system architecture.

Referring now to the drawings in which like reference numbers represent corresponding parts throughout:
FIG. 1 illustrates a system diagram of one embodiment of the present invention;
FIG. 2 illustrates a typical payload block diagram used with the present invention;
FIG. 3 illustrates a typical platform configuration used with the present invention; and
FIG. 4 is a flow chart illustrating exemplary steps used to practice the present invention.

In the following description of the preferred embodiment, reference is made to the accompanying drawings which form a part hereof, and in which is shown byway of illustration a specific embodiment in which the invention may be practiced. It is to be understood that other embodiments may be utilized and structural changes may be made without departing from the scope of the present invention.

### Overview Of Related Art

Communications systems have been enhanced through the use of satellite transmission links. Communications satellites are typically used in a "bent pipe" scenario, where the data is transmitted up ("uplinked") to the satellite from a ground station, and the satellite relays the uplink data down ("downlinks") to another geographically distant ground station. Communication satellites can also operate in a similar manner to cellular telephone systems, where the communication satellite provides spot beams to specific, distinct geographic locations. This allows for each location to receive different information if desired, e.g., one location can receive a local event for that region, while simultaneously, another location can receive a local event for that region.

However, communications satellites are typically in geosynchronous orbit around the Earth, which places them at a distance of 35,788 kilometers (km) above the Earth's surface. Although electromagnetic signals travel at the speed of light, these signals must be uplinked from the ground station, be processed by the satellite, and be downlinked to another ground station and/or a user antenna. Since the distance between original transmission and final destination is 35,788 km times two (71,576 km), plus the processing time on-board the satellite, a significant delay in the system transit time is introduced. Such delays are especially noticeable in duplex communications systems.

As more data is transmitted between distant geographic places, the satellite data throughput capabilities become strained. Further, the delay in transmitting such data, because of the greater distance that the data must travel, along with the increases in processing time on-board the satellite, reduce the effectiveness of the satellite transmission scheme.

The present invention minimizes the delay in the system by providing a shorter distance between the "satellite" and the ground station, as well as reducing the amount of data that is travelling through each "satellite." The present invention uses a "Geostationary" aeronautical platform that is suitable for microwave and other payload platforms similar to those used in satellite communications systems. Since the distance between the ground station and the platform is only twenty km, the delay between transmission and reception is reduced to less than 0.06% of that of a geosynchronous satellite transmission system.

### Overview Of The Invention

It is difficult to provide high bandwidth connectivity such as that which is needed with Internet and/or multimedia applications, from the beginning of a system directly to the terminals of end users. Geosynchronous (GEO) satellites are limited by bandwidth efficiency and underserve highly populated areas. Middle Earth Orbit (MEO) and Low Earth Orbit (LEO) satellites are complex in nature and the user terminals are required to track the satellites. Further, MEO/LEO systems require data management and data switching techniques between satellites as the satellites pass over geographic service regions. Terrestrial systems are limited by the infrastructure deployment rate and cost.

The system of the present invention can be deployed quickly, is scaleable to markets and market sizes, and can be serviced and upgraded with new technology. The system of the present invention can also be developed to serve transportable and/or mobile users.

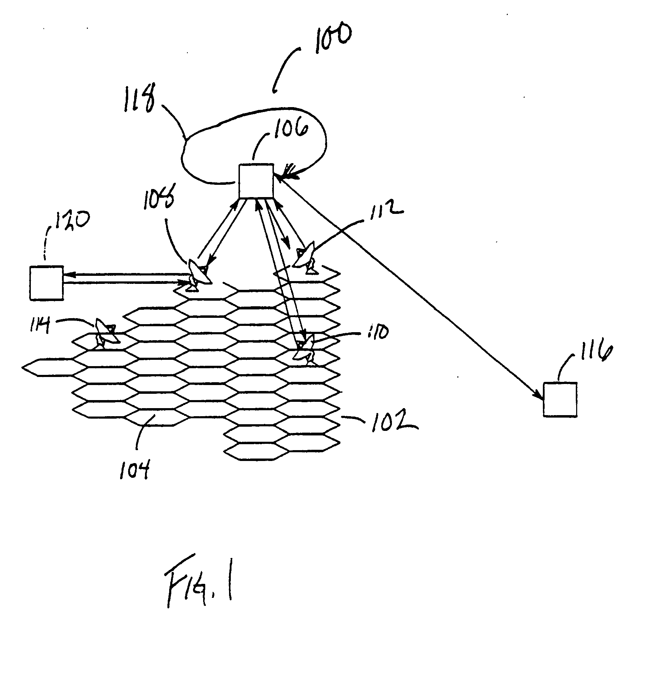

FIG. 1 illustrates a system diagram of one embodiment of the present invention.

FIG. 1 illustrates system 100, which has a cellular pattern 102 that parcels out geographic locations on the Earth's surface. The edges of the cells 104 are not physical boundaries within the cellular pattern 102; each cell 104 represents a geographic area that can receive a signal with a predetermined signal strength or receives a antenna radiation spot in a spot beam pattern that is available from and provided by platform 106.

Platform 106 communicates with gateway antenna 108, user terminals 110-114, and control station 116. Each communication link between platform 106 and gateway antenna 108, user terminals 110-114, and control station 116 provides information to platform 106 and/or the gateway antenna 108, user terminals 110-114, or control station 116 as described below.

Platform 106 is a stratosphere-based platform that remains substantially stationary relative to a geographic region on the earth. The platform 106 is controlled by control station 116 to fly in a small radius flight path 118, typically a circle, but can also be ellipsoidal or otherwise shaped, over a given spot on the earth. Each platform 106 is used as a communications node for gateway antenna 108 and user terminals 110-114 antennas that are pointed in the direction of the platform. Each gateway antenna 108 and user terminal 110-114 antenna that is pointed at the platform has a beamwidth wide enough to maintain communications links with the platform 106 throughout the flight path 118.

Gateway 108 is also coupled to terrestrial network 120, which is connected to land-based lines that interconnect with the Internet, as well as having the capability to interconnect with other networks. This gives user terminals 110-114 access to the network 120 without having a direct connection through a server, as well as avoiding multiple servers, routers, etc. that may be physically between user terminals 110-114 and terrestrial network 120.

Ground station 116 acts as a control station for platform 106, and other platforms 106 throughout system 100. Ground station 116 provides control functions, such as attitude control, altitude management, and replacement of parts and/or platforms 106 throughout system 100. Ground station 116 determines when and if a specific platform 106 needs repair, replacement, or maintenance functions performed, by monitoring the status of one or more platforms 106 in system 100.

The antennas used by the platform 106 and the user terminal antennas 110-114, as well as the gateways 108, allow for large data throughput in the present invention. Since there is a shorter physical distance between user terminals 110-114 and data sources, e.g., other user terminals 110-114, data warehouses, etc., the system 100 allows for users to access large amounts of data at a large rate, because the user can now use higher frequency communications links directly to the platform 106, without concerns for users in other geographic areas that may want access to the same data at the same time.

For example, user terminal 110 can access data from a data warehouse connected to network 120 through platform 106 and gateway 108, without having to go through a local server, local router, and other physical hardware that may delay the delivery of data through network 120 to user terminal 110. Further, this allows user terminal 110 access to network 120, and other data sources connected to network 120, without regard to other local and/or geographically distant users, because of the direct connection that user terminal 110 has with platform 106.

### Platform Architecture

The platforms 106 are maintained in the desired orbit aerodynamically with electric power generated with hybrid solar energy and hydrogen fuel cells located on the platform 106. Payload modules on the platform 106 maintain attitude and are decoupled from the platform 106 motions with gimbals or other decoupling techniques. Both payload 106 and user terminal 110-114 antennas are designed to accommodate platform 106 station keeping dynamics.

The user data is processed through the gateway 108. The platforms 106 are in a nominal altitude of 20 kilometers. Since the platforms 106 are in such a low altitude orbit compared with the 35,788 kilometer orbit for geosynchronous satellites, the communication system 100 has a delay latency equivalent or better than terrestrial networks for the same geographic area.

The system 100 can also use frequency, polarization and/or spatial diversities to bring bandwidth density efficiently to as high as 222 MHz/kilometer² into highly populated urban areas. The closely packed spatial diversity is analogous to orbital slots for geosynchronous satellites but is applied in two dimensions, which also allows competing systems to exist.

The station keeping requirement for the platform 106 is that the platform 106 should stay within a 600 meter turning radius and a +/- 30 meter vertical altitude over all environment conditions. This allows for the user terminals 110-114 on the ground to use antennas that have beamwidths wide enough to maintain contact with the platform 106 without tracking the platform 106, as would be required in Low Earth Orbit (LEO) and Middle Earth Orbit (MEO) satellite constellations. The command center 116 controls the platforms 106, and provides, when necessary, spare platforms 106 to ensure a high rate of overall system availability, typically 99.9%.

The communications payload on the platform 106 can be a simple transponder design connecting the user terminals 110-114 to the gateways 108, and can also be a more complex communications system design. The gateway 108 antennas mutually autotrack the ground station 116 antennas. To achieve the bandwidth density on the user terminal 110-114 links, the multibeams are arranged in a conventional four-cell reuse configuration, but other reuse configurations can be utilized with the present invention.

The cell 104 size can be combined with encoding schemes, such as Code Division Multiple Access (CDMA), Time Division Multiple Access (TDMA), Frequency Division Multiple Access (FDMA), or combinations of these schemes, to overcome the interference caused by the worst case platform motions. Further, the user terminal 110-114 links can be designed for any frequency band, including Ka- and Ku-bands. The platforms 106 that meet the GEO-stationary requirement shown in FIG. 1 are derivatives of U.S. Patent No. 5,810,284, which is incorporated by reference herein.

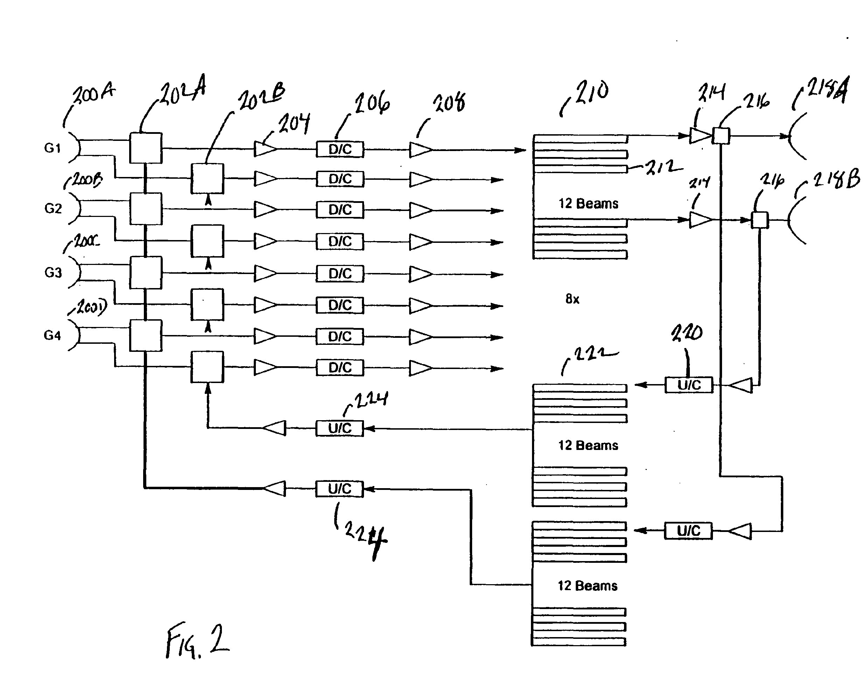

FIG. 2 illustrates a typical payload block diagram used with the present invention.

The block diagram shows gateway antennas 200A-200D that act as transmit and receive antennas for platform 106. Each antenna 200A-200D is coupled to diplexers 202 and amplifiers 204. The signals received by the antennas 200A-200D are downconverted using downconverters 206, and the downconverted signals are amplified by amplifiers 208. Each signal is then separated into subbands 210 and the subbands 210 are further divided into user signals 212. The user signals 212 are then sent through an amplifier 214 and diplexer 216 to user antennas 218A-218B for transmission to user terminals 110-114.

The return link signals from the user terminals 110-114 are received at user antennas 218A-218B, and diplexed through diplexers 216 to an upconverter 220. Each signal is combined in combiner 222, where twelve user signals are combined in much the same fashion as they are separated into subbands 210. The signals are upconverted again at upconverter 224, and sent back to gateway 108 via antennas 200A-200D.

The frequency of the signals received by the user antennas 218A-218B can be different than that of a GEO satellite, e.g., where a typical GEO satellite uses a 29.5-30 GHz signal as an uplink signal, the signal to the platform 106 can be a 19.7-20.2 GHz signal, to avoid interference with existing GEO satellites. Further, the signals transmitted by user antennas 218A-218B can be of a different frequency than existing GEO satellite downlink signals, e.g., the signal can be a 29.5-30 GHz signal instead of the typical 19.7-20.2 GHz signal used by GEO satellites, again to avoid interference.

The available bandwidth of the signal received by gateway antennas 200A-200D is typically 500 MHz, which is divided into two 250 MHz subbands by diplexers 202A and 202B. Each 250 MHz subband supports twelve user signals 212, and there are eight subbands, therefore, the platform 106 payload can support 96 user signals 212. This configuration can achieve a bandwidth of 6MHz/km² if the corresponding cell 104 size is 8 km hexagonal.

### Gateway Characteristics

The gateway 108 uses high frequency communications links, typically a 92-95 GHz uplink to the platform 106 and an 81-84 GHz downlink signal from the platform 106. The frequency bands within the uplink and downlink signals are polarization reused for each of the gateways 108 in the system 100. Thus, each platform 106 can communicate with one or more gateways 108. The gateways 108 are spatially separated and can use autotracking antennas to maximize data throughput to the platforms 106. By using a frequency/polarization reuse schema, a reuse factor of eight can be achieved, which yields a per-platform 106 bandwidth throughput of 24 GHz. The gateways 108 process and route the user data either externally through terrestrial networks 120, or other networks such as satellite networks, or can route data to the platform 106 directly to the user terminals 110-114 within the coverage area 102. The gateway 108 links can also use cross-polarization cancellation techniques to maintain link performance over the worst case weather scenarios, e.g., rain.

### User Terminal Characteristics

The user terminal 110-114 antenna should have a sufficient beamwidth to accommodate the platform 106 flight path 118, e.g., used for station keeping. Simultaneously, the beamwidth of the user terminal 110-114 must be narrow enough to allow multiple platforms 106 to operate over the same coverage area 102 to further increase the bandwidth density if demand rises. Corresponding to the FIG. 2 payload, 30 cm diameter antennas can be used for cells 104 directly underneath the platform 106, and 45 cm diameter antennas are required for cells 104 at the fringe of the coverage area to maintain communications links for the nominal E 1 (2.048 MBPS) data rate.

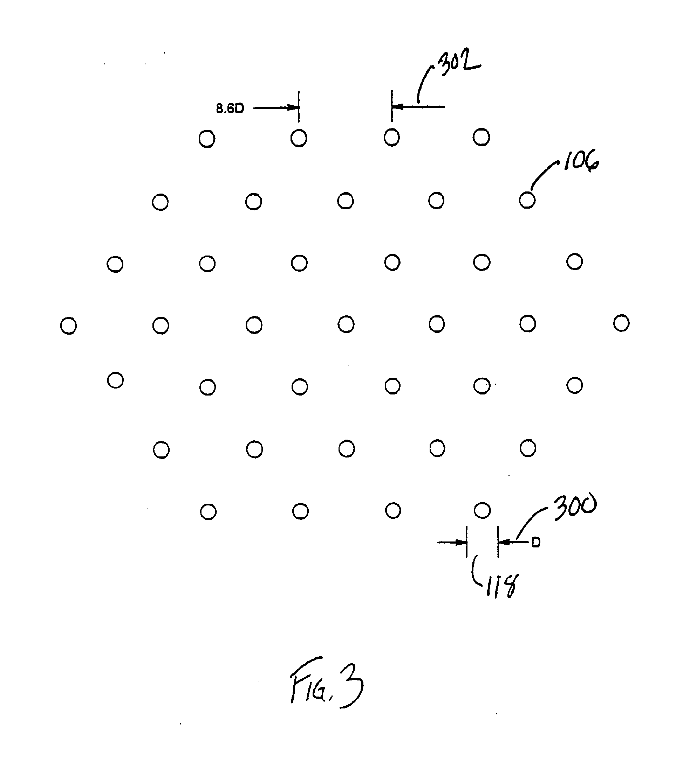

The sidelobe level for these user terminal 110-114 antennas at Ka-band allows hexagonal packing of 37 platforms 106 as shown in FIG. 3 with minimum mutual interference. Each platform travels on flight path 118 that has a radius 300 of distance D. The distance 302 between platforms is 8.6 times D. This configuration increases bandwidth density in the overlapping region to 222 MHz/km2. The interference between the GEO Ka-band terminals and the system of the present invention can largely be mitigated with spatial separations.

### System Optimization

The system of the present invention can be scaled and optimized in many ways when deployed over various markets. The payload can be designed in increments of 6 GHz throughput corresponding to a single gateway 108. The antenna beams can be selectively populated to cover necessary cells 104. The payload can be upgraded and reconfigured when platforms 106 are retrieved for maintenance. The platform 106 can be optimized for tighter station keeping with smaller payloads. Correspondingly the cell 104 size can be reduced for higher bandwidth density. In turn, the overall system 100 capacity can be maintained with multiple platforms 106 over a coverage area 102.

### Process Chart

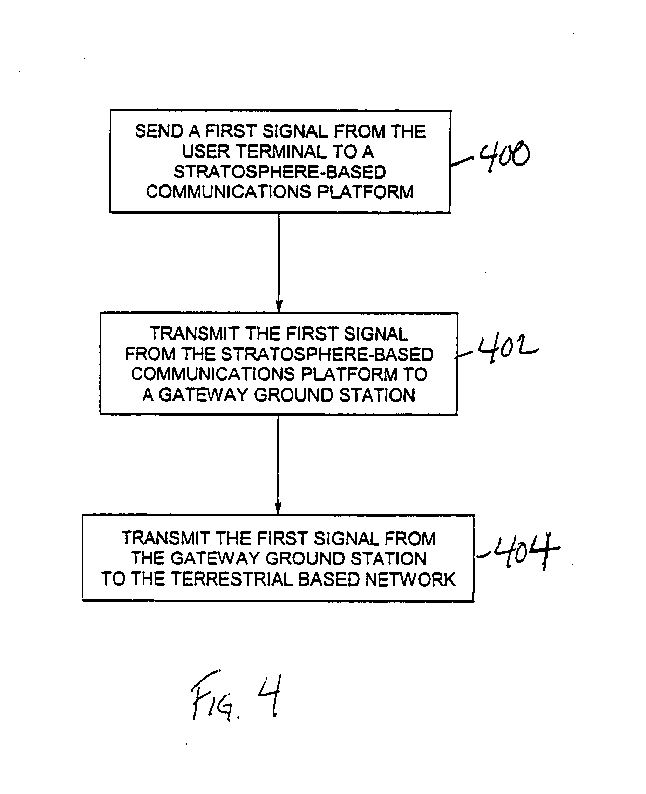

FIG. 4 is a flow chart illustrating exemplary steps used to practice the present invention.

Block 400 illustrates performing the step of sending a first signal from the user terminal to a stratosphere-based communications platform.

Block 402 illustrates performing the step of transmitting the first signal from the stratosphere-based communications platform to a gateway ground station.

Block 404 illustrates performing the step of transmitting the first signal from the gateway ground station to the terrestrial based network.

### Conclusion

This concludes the description of the preferred embodiment of the invention. The following paragraphs describe some alternative methods of accomplishing the same objects. The present invention, although described with respect to RF and electrical systems, can also be used with optical systems to accomplish the same goals. Further, the platforms may be stationed at different altitudes, have different packing densities, or use different payloads to accomplish substantially the same functions as described herein.

In summary, the present invention discloses a method for communicating and a communications system apparatus. The apparatus comprises a communications platform and a gateway. The communications platform is located in a stratospheric location and communicates directly with a user terminal, receiving information from the user terminal and transmitting information to the user terminal. The gateway communicates with the communications platform and couples the user terminal with a terrestrial-based network through the communications platform

The method comprises sending a first signal from the user terminal to a stratosphere-based communications platform, transmitting the first signal from the stratosphere-based communications platform to a gateway ground station, and transmitting the first signal from the gateway ground station to the terrestrial based network.

The foregoing description of the preferred embodiment of the invention has been presented for the purposes of illustration and description. It is not intended to be exhaustive or to limit the invention to the precise form disclosed. Many modifications and variations are possible in light of the above teaching. It is intended that the scope of the invention be limited not by this detailed description, but rather by the claims appended hereto.

## Claims

1. A communications system (100), comprising:
a plurality of communication platforms (106), each communications platform (106) traveling on a path which is located in a stratosphere-based substantially geostationary location, each communications platform (106) having a transponder being adapted for communicating directly with a user terminal (110-114), for receiving information from the user terminal (110-114) and for transmitting information to the user terminal (110-114);
and
a gateway (108), which is adapted for communicating with one of the communications platforms (106) and for coupling the user terminal (110-114) with a terrestrial based network (120) through the communications platform (106)
**characterized in that**
each traveling path has a radius D, and the distance between two neighboring platforms is 8.6 times D.

2. The system of claim 1, **characterized in that** the gateway (108) is adapted for communicating with more than one communications platform (106).

3. The system of claim 2, **characterized in that** the user terminal (110-114) is adapted for communicating with only one communications platform (106).

4. The system of any of claims 1 - 3, **characterized in that** the user terminal (110-114) is adapted for communicating with the communications platform (106) in a first frequency band, and the communications platform (106) is adapted for communicating with the gateway (108) in a second frequency band.

5. The system of any of claims 1 - 4, **characterized in that** the stratosphere-based substantially geostationary location of the communications platform (106) is within a predetermined distance of the user terminal (110-114) to maintain communications between the communications platform (106) and the user terminal (110-114).

6. The system of any of claims 1 - 5, **characterized in that** the plurality of communications platforms (106) are hexagonally packed.

7. A communications signal, generated by performing the steps of:
sending a first signal from a user terminal (110-114) to one of a plurality of stratosphere-based substantially geostationary communications platform (106), each traveling on a path having a radius D and each distant from a neighboring platform by 8.6 D;
transponding the first signal from one of the plurality of the stratosphere-based substantially geostationary communications platforms (106) to a gateway ground station (108); and
transmitting the first signal from the gateway ground station (108) to a terrestrial based network (120).

8. The communications signal of claim 7, wherein the plurality of stratosphere-based substantially geostationary communications platforms (106) are hexagonally packed.

9. A method for communicating between a user terminal (110-114) and a terrestrial based network (120), comprising:
sending a first signal from the user terminal (110-114) to a plurality of stratosphere-based substantially geostationary communications platforms (106) each traveling on a path having a radius D and each distant from a neighboring platform by 8.6 D;
transponding the first signal from one of the stratosphere-based substantially geostationary communications platforms (106) to a gateway ground station (108); and
transmitting the first signal from the gateway ground station (108) to the terrestrial based network (120).

10. The method of claim 9, wherein the plurality of stratosphere-based substantially geostationary platforms (106) are hexagonally packed.

## Patentansprüche

1. Kommunikationssystem (100), mit:
einer Vielzahl von Kommunikationsplattformen (106), wobei sich jede Kommunikationsplattform entlang eines Weges bewegt, der sich in einem stratosphären-basierten, im Wesentlichen geostationären Ort befindet, wobei jede Kommunikationsplattform (106) einen Transponder aufweist, der zum direkten Kommunizieren mit einem Benutzer-Terminal (110-114), zum Empfangen einer Information von dem Benutzer-Terminal (110-114) und zum Senden einer Information an das Benutzer-Terminal (110-114) angepasst ist; und
einem Gateway (108), das zum Kommunizieren mit einer der Kommunikationsplattformen (106) und zum Koppeln des Benutzer-Terminals (110-114) über die Kommunikationsplattform (106) an ein terrestrisches Netzwerk (120) angepasst ist,
**dadurch gekennzeichnet, dass**
jeder Bewegungsweg einen Radius D aufweist, und
die Entfernung zwischen zwei benachbarten Plattformen das 8,6-fache von D ist.

2. System nach Anspruch 1, **dadurch gekennzeichnet, dass** das Gateway (108) zum Kommunizieren mit mehr als einer Kommunikationsplattform (106) angepasst ist.

3. System nach Anspruch 2, **dadurch gekennzeichnet, dass** das Benutzer-Terminal (110-114) für eine Kommunikation mit lediglich einer Kommunikationsplattform (106) angepasst ist.

4. System nach einem der Ansprüche 1 bis 3, **dadurch gekennzeichnet, dass** das Benutzer-Terminal (110-144) für eine Kommunikation mit der Kommunikationsplattform (106) in einem ersten Frequenzband angepasst ist, und dass die Kommunikationsplattform (106) für eine Kommunikation mit dem Gateway (108) in einem zweiten Frequenzband angepasst ist.

5. System nach einem der Ansprüche 1 bis 4, **dadurch gekennzeichnet, dass** der stratosphären-basierte, im Wesentlichen geostationäre Ort der Kommunikationsplattform (106) innerhalb einer vorbestimmten Entfernung zum Benutzer-Terminal (110-114) liegt, um eine Kommunikation zwischen der Kommunikationsplattform (106) und dem Benutzer-Terminal (110-114) aufrecht zu erhalten.

6. System nach einem der Ansprüche 1 bis 5, **dadurch gekennzeichnet, dass** die Vielzahl von Kommunikationsplattformen (106) hexagonal gepackt ist.

7. Kommunikationssignal, welches durch ein Durchführen der folgenden Schritte erzeugt wird:
Senden eines ersten Signals von einem Benutzer-Terminal (110-114) an eine Plattform einer Vielzahl von stratosphären-basierten, im Wesentlichen geostationären Kommunikationsplattformen (106), wobei sich diese auf einem Weg mit einem Durchmesser D bewegen und wobei jede um 8,6 D von einer benachbarten Plattform entfernt ist;
Empfangen/Senden des ersten Signals von einer der Vielzahl von stratosphären-basierten, im Wesentlichen geostationären Kommunikationsplattformen (106) zu einer Gateway-Bodenstation (108); und
Senden des ersten Signals von der Gateway-Bodenstation (108) an ein terrestrisches Netzwerk (120).

8. Kommunikationssignal nach Anspruch 7, wobei die Vielzahl von stratosphären-basierten, im Wesentlichen geostationären Kommunikationsplattformen (106) hexagonal gepackt ist.

9. Verfahren zum Kommunizieren zwischen einem Benutzer-Terminal (110-114) und einem terrestrischen Netzwerk (120), mit den Schritten:
Senden eines ersten Signals von dem Benutzer-Terminal (110-114) zu einer Vielzahl von stratosphären-basierten, im Wesentlichen geostationären Kommunikationsplattformen (106), wobei sich jede auf einem Weg mit einem Radius D bewegt und um 8,6 D von einer benachbarten Plattform entfernt ist;
Senden/Empfangen eines ersten Signals von einer Plattform der stratosphären-basierten, im Wesentlichen geostationären Kommunikationsplattform (106) zu einer Gateway-Bodenstation (108); und
Senden des ersten Signals von der Gateway-Bodenstation (108) an das terrestrische Netzwerk (120).

10. Verfahren nach Anspruch 9, wobei die Vielzahl von stratosphären-basierten, im Wesentlichen geostationären Plattform (106) hexagonal gepackt ist.

## Revendications

1. Système de communication (100), comprenant:
une pluralité de plates-formes de communication (106), chaque plate-forme de communication (106) circulant sur une trajectoire se trouvant à une position stratosphérique substantiellement géostationnaire, chaque plate-forme de communication (106) possédant un répéteur qui est adapté pour communiquer directement avec un terminal d'utilisateur (110 à 114), pour recevoir des informations du terminal d'utilisateur (110 à 114) et pour émettre des informations vers le terminal d'utilisateur (110 à 114) ; et
une passerelle (108) qui est adaptée pour communiquer avec l'une des plates-formes de communication (106) et pour raccorder le terminal d'utilisateur (110 à 114) avec un réseau terrestre (120), via la plate-forme de communication (106),
**caractérisé en ce que** chaque trajet de circulation a un rayon D et la distance entre deux plates-formes adjacentes est de 8,6 fois D.

2. Système selon la revendication 1, **caractérisé en ce que** la passerelle (108) est adaptée pour communiquer avec plus d'une plate-forme de communication (106).

3. Système selon la revendication 2, **caractérisé en ce que** le terminal d'utilisateur (110 à 114) est adapté pour ne communiquer qu'avec une seule plate-forme de communication (106).

4. Système selon l'une quelconque des revendications 1 à 3, **caractérisé en ce que** le terminal d'utilisateur (110 à 114) est adapté pour communiquer avec la plate-forme de communication (106) sur une première bande de fréquences et la plate-forme de communication (106) est adaptée pour communiquer avec la passerelle (108) sur une seconde bande de fréquences.

5. Système selon l'une quelconque des revendications 1 à 4, **caractérisé en ce que** la position stratosphérique substantiellement géostationnaire de la plate-forme de communication (106) se situe à une distance prédéterminée du terminal d'utilisateur (110 à 114), afin d'assurer les communications entre la plate-forme de communication (106) et le terminal d'utilisateur (110 à 114).

6. Système selon l'une quelconque des revendications 1 à 5, **caractérisé en ce que** la pluralité de plates-formes de communication (106) sont disposées hexagonalement.

7. Signal de communication produit en exécutant les étapes consistant à :
émettre un premier signal depuis un terminal d'utilisateur (110 à 114) vers l'une d'une pluralité de plates-formes de communication (106) stratosphériques substantiellement géostationnaires, chacune circulant sur une trajectoire ayant un rayon D et chacune étant distante de 8,6 D d'une plate-forme adjacente ;
répéter le premier signal depuis l'une de la pluralité de plates-formes de communication (106) stratosphériques substantiellement géostationnaires vers une station terrestre servant de passerelle (108) ; et
émettre le premier signal entre la station terrestre servant de passerelle (108) et un réseau terrestre (120).

8. Signal de communication selon la revendication 7, dans lequel la pluralité de plates-formes de communication (106) stratosphériques substantiellement géostationnaires sont disposées hexagonalement.

9. Procédé de communication entre un terminal d'utilisateur (110 à 114) et un réseau terrestre (120), comprenant les étapes consistant à :
émettre un premier signal depuis le terminal d'utilisateur (110 à 114) vers une pluralité de plates-formes de communication (106) stratosphériques substantiellement géostationnaires, chacune circulant sur une trajectoire ayant un rayon D et chacune étant distante de 8,6 D d'une plate-forme adjacente;
répéter le premier signal depuis l'une de la pluralité de plates-formes de communication (106) stratosphériques substantiellement géostationnaires vers une station terrestre servant de passerelle (108); et
émettre le premier signal entre la station terrestre servant de passerelle (108) et un réseau terrestre (120).

10. Procédé selon la revendication 9, dans lequel la pluralité de plates-formes de communication (106) stratosphériques substantiellement géostationnaires sont disposées hexagonalement.
